# EUROPÄISCHE PATENTSCHRIFT

(11) **EP 2 038 150 B1**
(45) Veröffentlichungstag und Bekanntmachung des Hinweises auf die Patenterteilung: **15.09.2010**
(21) Anmeldenummer: 07786866.9
(22) Anmeldetag: 27.06.2007
(51) Int. Cl.: B60T 7/10, B60T 13/74

(54) **FESTSTELLBREMSANLAGE FÜR KRAFTFAHRZEUGE**
PARKING BRAKE SYSTEM FOR MOTOR VEHICLES
SYSTÈME DE FREINAGE POUR L'IMMOBILISATION DE VÉHICULES AUTOMOBILES

(30) Priorität: 27.06.2006 DE 102006029787; 26.06.2007 DE 102007029632
(43) Veröffentlichungstag der Anmeldung: 25.03.2009
(73) Patentinhaber: Continental Teves AG & Co. oHG, 60488 Frankfurt (DE)
(72) Erfinder: HEISE, Andreas, 64390 Erzhausen (DE)
(86) Internationale Anmeldenummer: PCT/EP2007/056426
(87) Internationale Veröffentlichungsnummer: WO 2008/000769

(56) Entgegenhaltungen:
- EP-A- 1 361 124
- EP-A- 1 418 103
- EP-A1- 1 439 102
- DE-C1- 10 006 656

## Beschreibung

Die vorliegende Erfindung betrifft eine Feststellbremsanlage für Kraftfahrzeuge mit einem Bedienelement und wenigstens zwei elektromechanischen Aktuatoren zur Erzeugung einer Feststellbremskraft an jeweils einem Rad des Kraftfahrzeugs, wobei die elektromechanischen Aktuatoren jeweils mit einer Radelektronik versehenen sind und wobei das Bedienelement mittels einer mindestens ersten Signalleitung über eine Steuereinheit mit der Radelektronik des ersten elektromechanischen Aktuators verbunden ist und mittels einer zweiten Signalleitung über eine weitere Steuereinheit mit der Radelektronik des zweiten elektromechanischen Aktuators verbunden ist.

Die Radelektroniken der elektromechanischen Aktuatoren bestehen aus einer Leistungselektronik und einer Steuer- und Regeleinheit. Durch die Radelektroniken wird einerseits die den elektromechanischen Aktuatoren zugeführte elektrische Energie gesteuert und geschaltet und anderseits findet eine Verarbeitung der zugeführten Signale statt. Für die Signal- bzw. Datenverarbeitung sind Mikrocontroller vorgesehen. Die Kombination von elektromechanischem Aktuator und Radelektronik wird auch als "Smart Actuator" bezeichnet.

Aus der DE 100 06 656 C1 ist eine Feststellbremsanlage für Kraftfahrzeuge bekannt, bei der ein Bedienelement über eine erste Signalleitung mit einer ersten Steuereinheit verbunden ist und über eine zweite Signalleitung mit einer zweiten Steuereinheit verbunden ist. Bei der vorbekannten Feststellbremsanlage ist weiterhin vorgesehen, dass die erste Steuereinheit über eine weitere, dritte Signalleitung mit der zweiten Steuereinheit verbunden ist, wobei ein durch Betätigen des Bedienelementes signalisierter Feststell-Bremswunsch über die dritte Signalleitung von der ersten Steuereinheit an die zweite Steuereinheit übermittelt wird. Da jede Steuereinheit einen elektromechanischen Aktuator ansteuert, ist bei einem Ausfall einer der beiden Steuereinheiten, ein ordnungsgemäßer Betrieb der Feststellbremsanlage nicht mehr möglich.

Es ist daher Aufgabe der vorliegenden Erfindung, eine Feststellbremsanlage der eingangs genannten Gattung dahingehend zu verbessern, dass Defekte ohne Auswirkung auf die Funktionalität der Feststellbremsanlage bleiben und die Ausfallsicherheit weiter erhöht wird.

Diese Aufgabe wird erfindungsgemäß dadurch gelöst, dass mindestens eine dritte Signalleitung vorgesehen ist, die das Bedienelement direkt mit den Radelektroniken oder jeweils mit einem der elektromechanischen Aktuatoren verbindet und den Fahrerwunsch übermittelt. Dabei ist die dritte Signalleitung derart ausgebildet, dass sie einerseits das Bedienelement direkt mit den Radelektroniken der elektromechanischen Aktuatoren verbindet und andererseits die beiden Radelektroniken miteinander verbindet und eine Kommunikation zwischen den Radelektroniken ermöglicht. Damit wird erreicht, dass mindestens drei unabhängige Informationsleitungen und Datenwege mit Informationen zum Anziehen bzw. Lösen der Feststellbremse vorhanden sind und diese drei Informationen im fehlerlosen Zustand über unterschiedliche Datenwege an jede Radelektronik der elektromechanischen aktuatoren gelangt.

Die vorliegende Erfindung stellt also ein System dar, welches gegenüber den bekannten Konzepten, eine erheblich größere Verfügbarkeit bei einem ausgesprochen einfachen und günstigen Aufbaukonzept erlaubt. Unter "großer Verfügbarkeit" versteht man, dass der Betrieb der Feststellbremse möglichst immer möglich sein soll.

Bei einer vorteilhaften Weiterbildung ist eine vierte Signalleitung vorgesehen, die die beiden Radelektroniken der elektromechanischen Aktuatoren direkt miteinander verbindet und eine Kommunikation ermöglicht. Die Radelektroniken der elektromechanischen Aktuatoren weisen dabei ein Mittel zur Erzeugung eines Mehrheitsentscheides auf. Dieses Mittel wird vorzugsweise nicht durch den Mikrocontroller gebildet, sondern wird durch ein eigenes Bauteil gebildet.

Dabei ist vorgesehen, dass die den Radelektroniken zugeführten Signale des Bedienelementes mit einer ODER-Verknüpfung verbunden sind und eine Ansteuerung der elektromechanischen Aktuatoren nach Maßgabe des Mehrheitsentscheides erfolgt, d.h. der Mikrocontroller der Radelektronik kann eine Bedienung des elektromechanischen Aktuators erst dann umsetzen, wenn mindestens zwei der Signalleitungen das Betätigen oder das Lösen der Feststellbremse fordern.

Eine besonders vorteilhafte Weiterbildung sieht vor, dass der Radelektronik das Ausgangssignal eines sich am selben Rad befindenden Raddrehzahlsensors zugeführt wird.

Es ist vorgesehen, dass die Radelektronik wenigstens einen Mikroprozessor enthält, wobei als Mikroprozessor in den Radelektroniken redundante oder kernredundante Mikroprozessoren eingesetzt werden.

Bei einer bevorzugten Ausführungsform des erfindungsgemäßen Gegenstandes ist das Bedienelement mit mindestens drei Kanälen ausgestattet ist und gibt den Fahrerwunsch in Form von mindestens drei Schaltinformationen aus. Die Versorgung und/oder Auswertung des Bedienelementes erfolgt von der Bremsensteuereinheit oder von der weiteren Steuereinheit her. Das Bedienelement weist vorzugsweise elektronische Halbleiter-Bauelemente auf.

Bei einer weiteren vorteilhaften Weiterbildung des Erfindungsgegenstandes ist eine redundante Stromversorgung der Feststellbremsanlage vorgesehen. Dabei wird die redundante Stromversorgung durch zwei Batterien nebst Ladeschaltung gebildet. Alternativ ist die redundante Stromversorgung durch ein Bordnetzspannungsmanagementsystem gebildet.

Die Erfindung wird nachfolgend anhand von zwei Ausführungsbeispielen im Zusammenhang mit der beiliegenden Zeichnung näher erläutert. In der Zeichnung zeigen:
- Fig. 1: ein vereinfacht dargestellter Aufbau der erfin- dungsgemäßen Feststellbremsanlage,
- Fig. 2: eine schematische Darstellung eines elektromecha- nischen Aktuators mit Radelektronik,
- Fig. 3: ein Darstellung des Systemlayout der Feststell- bremsanlage nach Fig. 1,
- Fig. 4: eine schematische Teildarstellung des Aufbaus der Radelektronik;
- Fig. 5: ein schematisch dargestellter Aufbau der Feststell- bremsanlage nach Fig. 1 mit zwei Batterien zur e- lektrischen Energieversorgung und
- Fig. 6: ein weiterer schematisch dargestellter Aufbau der Feststellbremsanlage nach Fig. 1 mit einem Bord- netzspannungsmanagementsystem zur elektrischen E- nergieversorgung.

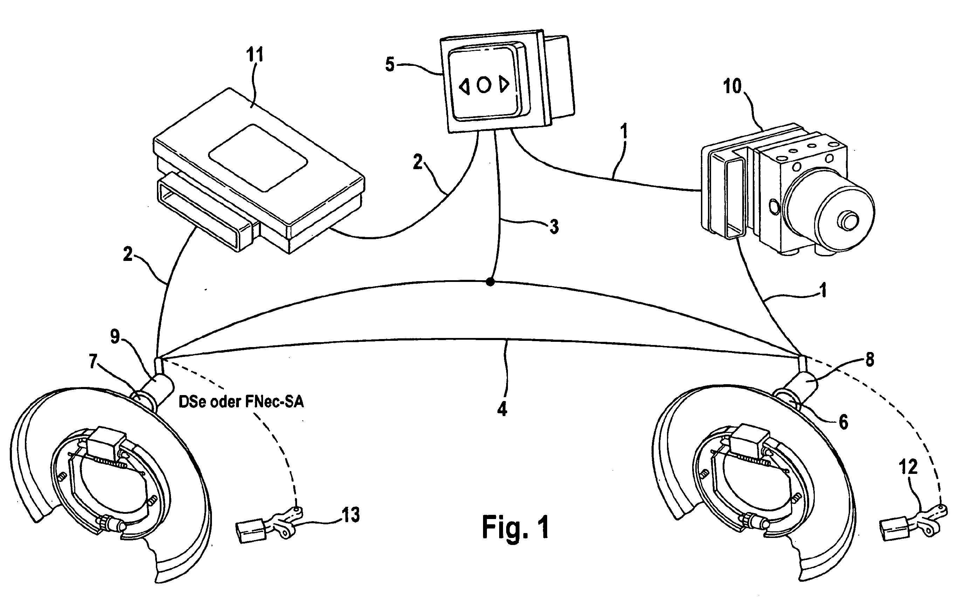

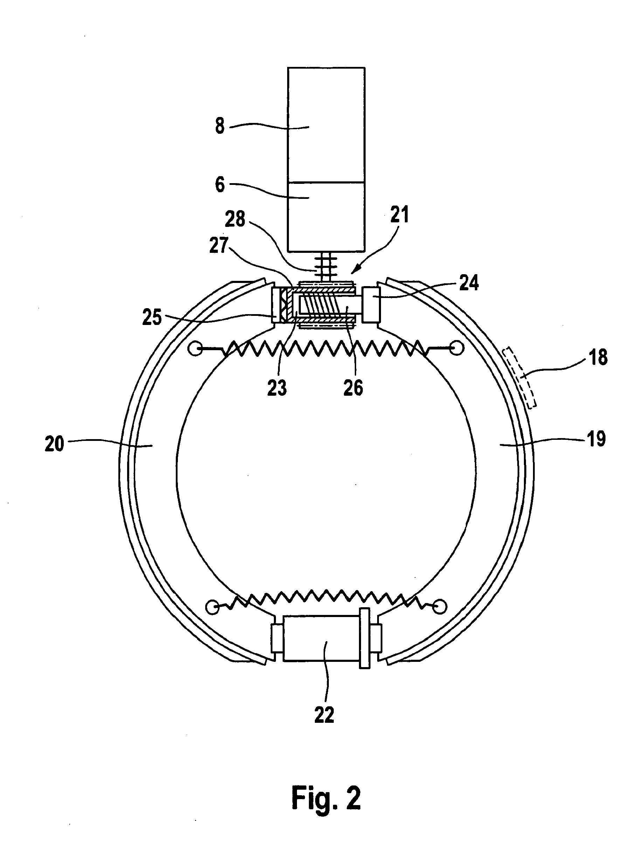

Die in Fig. 1 dargestellte Feststellbremsanlage weist an zwei Rädern der Hinterachse eine elektromechanisch betätigbare Feststellbremse auf, die nachfolgend beispielhaft anhand von Fig. 2 erläutert wird. Die vorliegende Erfindung ist sowohl für Feststellbremsanlagen, deren elektromechanisch betätigbare Feststellbremsen auf eine Scheibenbremse wirken, wie auch für Anlagen mit Feststellbremsen, die auf eine Trommelbremse wirken, verwendbar. Auch bei anderweitigen Reib oder Rastmechanismen, die zum Festsetzen von Rädern dienen, kann das System verwendet werden.

Anhand von Fig. 2 wird beispielhaft eine elektromechanisch betätigbare Feststellbremse beschrieben, die im Wesentlichen aus einer an sich bekannten Trommelbremse vom Typ "Duo-Servo", sowie einem elektromechanischen Aktuator 6 besteht. Die Trommelbremse vom Typ "Duo-Servo" weist eine lediglich teilweise dargestellte Bremstrommel 18, ein mit Reibflächen versehenes Paar von Bremsbacken 19, 20 und ein Spreizschloss 21 auf, das die Reibflächen der Bremsbacken 19, 20 mit der Innenseite der Bremstrommel 18 in Eingriff bringen kann. Charakteristisch für die Trommelbremse vom Typ "Duo-Servo" ist eine frei bewegliche bzw. schwimmend gelagerte Abstützvorrichtung 22, die dem Spreizschloss 21 gegenüber liegt und zwischen den Bremsbacken 19, 20 angeordnet ist. Das eben erwähnte Spreizschloss 21 wird im Wesentlichen durch eine Gewindemutter-Spindel-Anordnung 23 und zwei Druckstücke 24, 25 gebildet, wobei das eine Druckstück 24 mit der Spindel 26 und das andere Druckstück 14 mit der Gewindemutter 27 zusammenwirkt. Wie in Fig. 2 verdeutlicht ist, wird die Gewindemutter-Spindel-Anordnung 21 von einem Schraubrad 28 betätigt, das vom elektromechanischen Aktuator 6 angetrieben wird. Zu diesem Zweck weist die Gewindemutter 27 auf der äußeren Oberfläche eine Verzahnung auf, die parallel zur Achse der Gewindemutter 27 verläuft. Mit dieser Geradverzahnung der Gewindemutter 27 bildet das eben erwähnte Schraubrad 28 ein Schraubradgetriebe. Bei einer Betätigung des Schraubrads 28 durch den elektromechanischen Aktuator 6 wird die Gewindemutter 27 in eine Rotationsbewegung versetzt. Aufgrund dieser Rotationsbewegung der Gewindemutter 27 vollzieht die Spindel 26 der Gewindemutter-Spindel-Anordnung 23 eine Translationsbewegung und bringt die beiden Bremsbacken 29, 20 mit der gewünschten Zuspannkraft mit der Bremstrommel 18 in Eingriff.

Um einen Feststellbremsvorgang durchführen zu können, ist entweder ein nicht dargestelltes Untersetzungsgetriebe oder die Gewindemutter-Spindel-Anordnung 23 selbsthemmend ausgebildet. Durch diese Maßnahme verbleiben die Bremsbacken 19, 20 im stromlosen Zustand des elektromechanischen Aktuators 6 mit der Bremstrommel 18 in Eingriff.

Wie Fig. 2 weiterhin entnehmbar ist, ist dem elektromechanischen Aktuator 6 eine Radelektronik 8 zugeordnet. Diese Radelektronik 8 besteht aus einer Leistungselektronik und einer Steuer- und Regeleinheit. Durch die Radelektronik 8 wird einerseits die dem elektromechanischen Aktuator 6 zugeführte elektrische Energie gesteuert und geschaltet und anderseits findet eine Verarbeitung der zugeführten Signale statt.

Die in Fig. 1 dargestellte Feststellbremsanlage weist an den beiden Rädern der Hinterachse des Kraftfahrzeugs einen elektromechanischen Aktuator 6, 7 und eine jeweils zugeordnete Radelektronik 8, 9 auf. Zur Übermittlung des Fahrerwunsches ist ein Bedienelement 5 vorgesehen, welches mit drei Kanälen ausgestattet ist und den Fahrerwunsch in Form von drei Schaltinformationen ausgibt. Die Ausgangssignale des Bedienelementes 5 werden über eine erste Signalleitung 1 einer Bremsensteuereinheit 10 zugeführt und an die Radelektronik 8 des ersten elektromechanischen Aktuators 6, der sich am Rad hinten rechts befindet, weitergeleitet. Über eine zweite Signalleitung 2 werden die Ausgangssignale des Bedienelementes 5 einer weiteren Steuereinheit 11 zugeführt. Diese weitere Steuereinheit 11 wird beispielsweise durch ein Chassis-Control-Modul gebildet, das Steuergeräte und Auslösesensorik für Airbags sowie Insassenüberwachungssysteme umfasst. Von dieser weiteren Steuereinheit 11 werden die Ausgangssignale des Bedienelementes 5 an die Radelektronik 9 des zweiten elektromechanischen Aktuators 7, der sich am Rad hinten links befindet, weitergeleitet. Weiterhin ist eine dritte Signalleitung 3 vorgesehen, die das Bedienelement 5 direkt mit den Radelektroniken 8, 9 verbindet und die Ausgangssignale des Bedienelementes 5 direkt den Radelektroniken 8, 9 zuführt. Wie in Fig. 1 dargestellt, ist diese dritte Signalleitung sternförmig ausgebildet, d.h. sie verbindet einerseits das Bedienelement 5 direkt mit den Radelektroniken 8, 9 und verbindet andererseits die beiden Radelektroniken 8, 9 miteinander, um eine Kommunikation zwischen den Radelektroniken 8, 9 zu ermöglichen. Darüber hinaus ist eine vierte Signalleitung 4 vorgesehen, die ausschließlich dafür vorgesehen ist, die beiden Radelektroniken 8, 9 zu verbinden, um eine Kommunikation zwischen diesen beiden Radelektroniken 8, 9 zu ermöglichen.

Durch dieses gegenüber "Einfachfehlern" tolerante Design ergibt sich eine verbesserte Systemverfügbarkeit, da jeder Radelektronik 8, 9 drei unabhängige Informationsleitungen 1, 2, 3 bzw. 4 zugeführt werden. Im Falle eines Einfachfehlers - betreffend die Verkabelung, die weitere Steuereinheit 11, die Bremsensteuereinheit 10 oder das Bedienelement 5 - ist die vorliegende Feststellbremsanlage immer noch voll funktionsfähig und der Fahrer kann über den aufgetretenen Fehler gewarnt werden. Für den Fall eines Fehlers in einem elektromechanischen Aktuator 6 bleibt der andere elektromechanische Aktuator 7 unabhängig davon voll funktionsfähig. Eine Diagnostizierbarkeit der auftretenden Defekte ist weiterhin gegeben. Das System ist bei einem Fehler der Verbindungsleitungen 1, 2, 3 noch voll diagnostizierbar und auch bei Ausfall eines der Steuergeräte 10, 11 ist noch volle Verfügbarkeit der Feststellbremse gegeben. Bei einem Ausfall eines elektromechanischen Aktuators 8 (kein Anziehen mehr möglich) kann der verbleibende elektromechanische Aktuator 9 noch eine Parkfunktion und eine Lösefunktion zuverlässig darstellen.

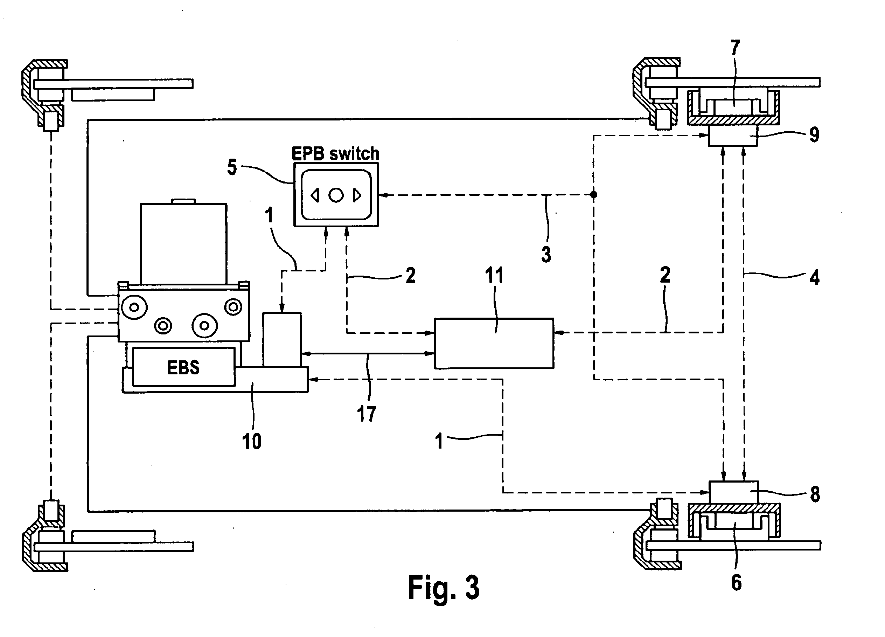

Wie in Fig. 3 dargestellt, ist zwischen den Steuergeräten 10 und 11 über einen CAN- oder Flexray-Datenbus 17 ein Kommunikationsweg vorgesehen. Da ein weiterer Kommunikationsweg über die Signalleitungen 1, 2 auch jeweils zu einem elektromechanischen Aktuator 6, 7 besteht und zwischen den elektromechanischen Aktuatoren 6, 7 untereinander ein Kommunikationsweg über die Signalleitung 4 besteht und eine weitere Verbindung vom Bedienelement 5 zu den Radelektroniken über die Signalleitung 3 besteht, ist bei Einfachfehlern in einer der Verbindungsleitungen 1, 2, 3, 4, dem Bedienelement 5, einem Steuergerät 10, 11 oder mit Einschränkungen eines elektromechanischen Aktuators 6, 7 jeweils noch ein normaler Betrieb des Systems möglich. Lediglich eine Störungsanzeige ist sinnvoll bzw. vorgeschrieben. Auftretende Fehler werden EBS dem Fahrer mitgeteilt.

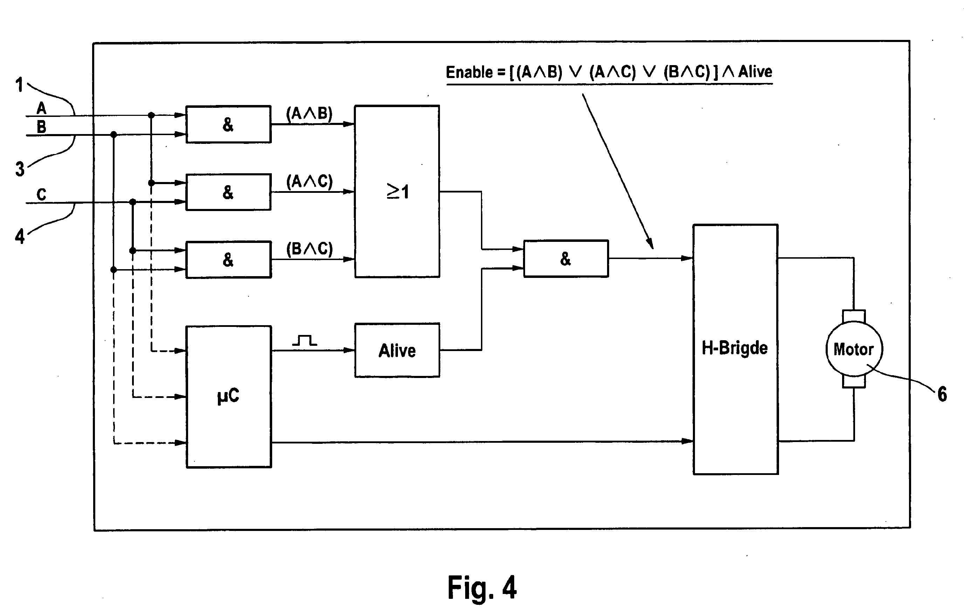

Wie dem System-Layout in Fig. 3 entnehmbar ist, werden jeder Radelektronik 8, 9 wenigstens zwei Signale des Bedienelementes 5 zugeführt: Der Radelektronik 8 am rechten Rad des Kraftfahrzeugs wird der Fahrerwunsch über die erste Signalleitung 1 und die Bremsensteuereinheit ECU 10 sowie über die dritte Signalleitung 3 zugeführt. Über die Kommunikationsleitung 4 kann zudem ein drittes Signal von der anderen Radelektronik 9 zugeführt werden, das diese über die zweite Signalleitung 2 und die weitere Steuereinheit 11 erhalten hat. Für die der Radelektronik 9 am linken Rad zugeführten Signale des Bedienelementes 5 gilt entsprechendes. Aus Sicherheitsgründen liegen also immer mindestens zwei unabhängige, eindeutige Anforderungen des Fahrzeugführers vor, um den elektromechanischen Aktuator 6, 7 zu aktivieren. Bei der beschriebenen Zuführung eines dritten Signals findet in den Radelektroniken 8, 9 ein Mehrheitsentscheid statt, wie es in Fig. 4 dargestellt ist. Fig. 4 zeigt schematisch, wie ein derartiger Mehrheitsentscheid in der Radelektronik 8 am hinteren rechten Rad des Kraftfahrzeugs arbeitet. Die Signalleitungen 1, 3, 4 werden mit einer ODER-Verknüpfung verbunden und der elektromechanische Aktuator 6 wird nach Maßgabe des Mehrheitsentscheides angesteuert. Die Radelektroniken 8, 9 enthalten wenigstens einen Mikroprozessor, der als redundanter oder kernredundanter Mikroprozessor ausgeführt ist.

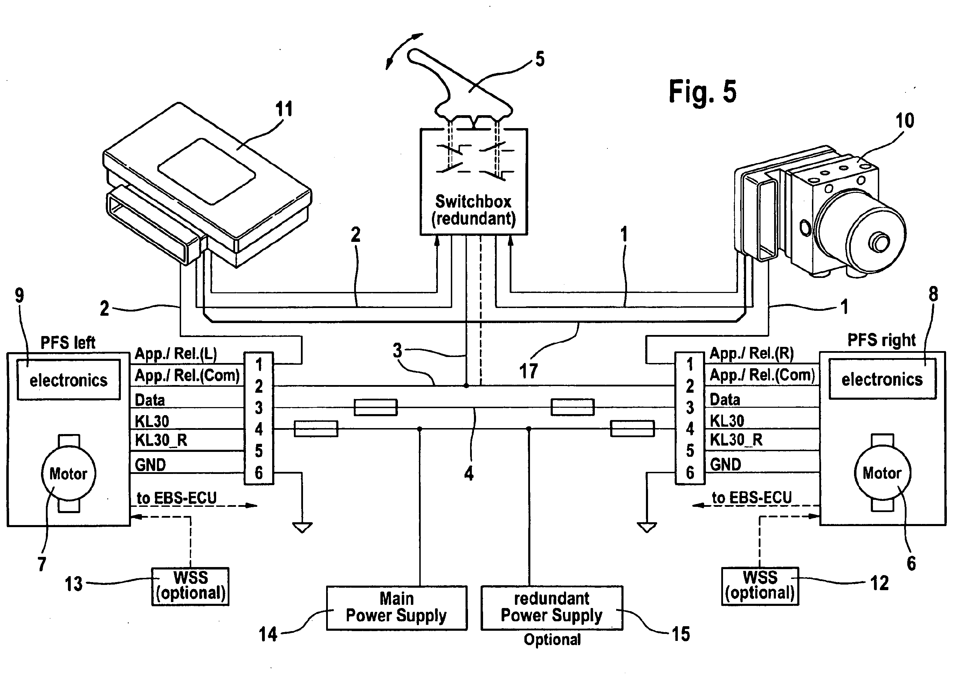

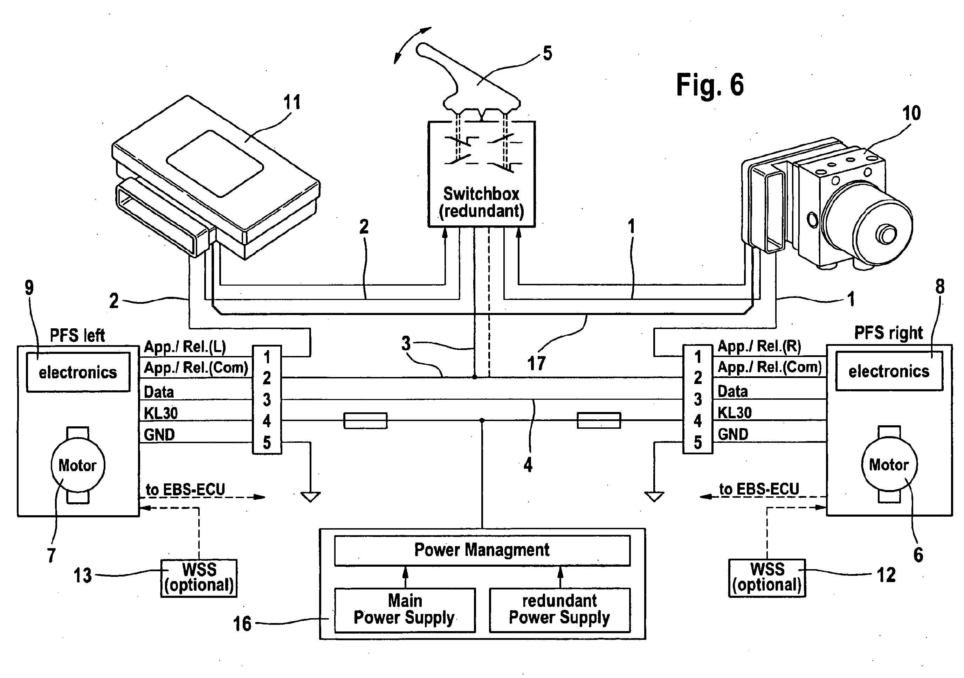

In Fig. 5 ist ein erweitertes Schaltbild dargestellt. Wird zu den beschriebenen Eigenschaften noch eine redundante Stromversorgung dargestellt, so kann auch bei Ausfall einer Stromversorgung die Funktionalität der Feststellbremsanlage noch vollständig dargestellt werden. Zu diesem Zweck sind in Fig. 5 zwei Batterien 14, 15 dargestellt, die die redundante Stromversorgung des Systems bilden. Die maximale Verfügbarkeit kann durch Versorgung des Systems mit zwei unabhängigen Batterien 14, 15 oder eine über ein Batteriemanagementsystem 16, wie es in Fig. 6 dargestellt ist, an die parkgebremsten Räder geführte elektrische Versorgungsleitung erreicht werden.

Die Versorgung des redundanten Bedienelements 5 kann bevorzugt auch aus den Steuergeräten 10, 11 heraus erfolgen. Es weist elektronische Halbleiter-Bauelemente auf.

Der Radelektronik 8, 9 wird jeweils das Ausgangssignal eines Raddrehzahlsensors 12, 13 zugeführt, der sich am selben Rad wie die Radelektronik 8, 9 befindet. Durch die Kommunikation über die direkte Leitung 4 zwischen den Radelektroniken 8, 9 kann eine "redundante" Fahr- oder Stillstandserkennung ausgeführt werden, welche auch bei Ausfall eines der Steuergeräte 10, 11 noch eine Feststellung ein Lösen oder sogar dynamische Abbremsung ermöglicht. Der Raddrehzahlsensor 12, 13 liefert der Radelektronik 8, 9 direkt die Information über die Radbewegung. Ein Abgleich der Raddrehzahlinformation der Raddrehzahlsensoren 12, 13 erfolgt durch die Kommunikation zwischen den beiden Radelektroniken 8, 9.

### Bezugszeichenliste

- 1: erste Signalleitung
- 2: zweite Signalleitung
- 3: dritte Signalleitung
- 4: vierte Signalleitung
- 5: Bedienelement
- 6: erster elektromechanischer Aktuator
- 7: zweiter elektromechanischer Aktuator
- 8: Radelektronik
- 9: Radelektronik
- 10: Bremsensteuereinheit ECU
- 11: Weitere Steuereinheit
- 12: Raddrehzahlsensor
- 13: Raddrehzahlsensor
- 14: Batterie
- 15: Batterie
- 16: Bordnetzspannungsmanagementsystem
- 17: CAN-Datenbus
- 18: Bremstrommel
- 19: Bremsbacke
- 20: Bremsbacke
- 21: Spreizschloss
- 22: Abstützvorrichtung
- 23: Gewindemutter-Spindel-Anordnung
- 24: Druckstück
- 25: Druckstück
- 26: Spindel
- 27: Gewindemutter
- 28: Schraubrad

## Patentansprüche

1. Feststellbremsanlage für Kraftfahrzeuge mit einem Bedienelement (5) und wenigstens zwei elektromechanischen Aktuatoren (6, 7) zur Erzeugung einer Feststellbremskraft an jeweils einem Rad des Kraftfahrzeugs, wobei die elektromechanischen Aktuatoren (6, 7) jeweils mit einer Radelektronik (8, 9) versehenen sind und wobei das Bedienelement (5) mittels mindestens einer ersten Signalleitung (1) über eine Steuereinheit (10) mit der Radelektronik (8) des ersten elektromechanischen Aktuators (6) verbunden ist und mittels einer zweiten Signalleitung (2) über eine weitere Steuereinheit (11) mit der Radelektronik (9) des zweiten elektromechanischen Aktuators (7) verbunden ist, **dadurch gekennzeichnet, dass** mindestens eine dritte Signalleitung (3) vorgesehen ist, die das Bedienelement (5) direkt mit den Radelektroniken (8, 9) oder jeweils mit einem der elektromechanischen Aktuatoren (6, 7) verbindet und den Fahrerwunsch übermittelt.

2. Feststellbremsanlage nach Anspruch 1, **dadurch gekennzeichnet, dass** die dritte Signalleitung (3) derart ausgebildet ist, dass sie einerseits das Bedienelement (5) direkt mit den Radelektroniken (8, 9) der elektromechanischen Aktuatoren (6, 7) verbindet und andererseits die beiden Radelektroniken (8, 9) miteinander verbindet und eine Kommunikation zwischen den Radelektroniken (8, 9) ermöglicht.

3. Feststellbremsanlage nach Anspruch 1, **dadurch gekennzeichnet, dass** eine vierte Signalleitung (4) vorgesehen ist, die die beiden Radelektroniken (8, 9) der elektromechanischen Aktuatoren (6, 7) direkt miteinander verbindet und eine Kommunikation ermöglicht.

4. Feststellbremsanlage nach einem der vorhergehenden Ansprüche, **dadurch gekennzeichnet, dass** die Radelektroniken (8, 9) der elektromechanischen Aktuatoren (6, 7) ein Mittel zur Erzeugung eines Mehrheitsentscheides aufweisen.

5. Feststellbremsanlage nach Anspruch 4, **dadurch gekennzeichnet, dass** die den Radelektroniken (8, 9) zugeführten Signale des Bedienelementes (5) mit einer ODER-Verknüpfung verbunden sind und eine Ansteuerung der elektromechanischen Aktuatoren (6, 7) nach Maßgabe des Mehrheitsentscheides erfolgt.

6. Feststellbremsanlage nach einem der vorhergehenden Ansprüche, **dadurch gekennzeichnet, dass** der Radelektronik (8, 9) das Ausgangssignal eines sich am selben Rad befindenden Raddrehzahlsensors (12, 13) zugeführt wird.

7. Feststellbremsanlage nach einem der vorhergehenden Ansprüche, **dadurch gekennzeichnet, dass** die Radelektronik (8, 9) wenigstens einen Mikroprozessor enthält.

8. Feststellbremsanlage nach Anspruch 7, **dadurch gekennzeichnet, dass** als Mikroprozessor in den Radelektroniken (8, 9) redundante oder kernredundante Mikroprozessoren eingesetzt werden.

9. Feststellbremsanlage nach einem der vorhergehenden Ansprüche, **dadurch gekennzeichnet, dass** das Bedienelement (5) mit mindestens drei Kanälen ausgestattet ist und den Fahrerwunsch in Form von mindestens drei Schaltinformationen ausgibt.

10. Feststellbremsanlage nach Anspruch 9, **dadurch gekennzeichnet, dass** die Versorgung und/oder Auswertung des Bedienelementes (5) von der Bremsensteuereinheit (10) oder von der weiteren Steuereinheit (11) her erfolgt.

11. Feststellbremsanlage nach Anspruch 9 oder 10, **dadurch gekennzeichnet, dass** das Bedienelement (5) elektronische Halbleiter-Bauelemente aufweist.

12. Feststellbremsanlage nach einem der vorhergehenden Ansprüche, **dadurch gekennzeichnet, dass** eine redundante Stromversorgung der Feststellbremsanlage vorgesehen ist.

13. Feststellbremsanlage nach Anspruch 12, **dadurch gekennzeichnet, dass** die redundante Stromversorgung durch zwei Batterien (14, 15) mit Ladeschaltung gebildet ist.

14. Feststellbremsanlage nach Anspruch 12, **dadurch gekennzeichnet, dass** die redundante Stromversorgung durch ein Bordnetzspannungsmanagementsystem (16) gebildet ist.

## Claims

1. Parking brake system for motor vehicles having a control element (5) and at least two electromechanical actuators (6, 7) for generating a parking brake force at in each case one wheel of the motor vehicle, wherein the electromechanical actuators (6, 7) are each provided with wheel electronic systems (8, 9), and wherein the control element (5) is connected via a controller (10) to the wheel electronic system (8) of the first electromechanical actuator (6) by means of at least a first signal line (1) and to the wheel electronic system (9) of the second electromechanical actuator (7) by means of a second signal line (2), **characterized in that** at least a third signal line (3) is provided which connects the control element (5) directly to the wheel electronic systems (8, 9) or respectively to one of the electromechanical actuators (6, 7) and conveys the driver's request.

2. Parking brake system according to Claim 1, **characterized in that** the third signal line (3) is embodied in such a way that, on the one hand, it connects the control element (5) directly to the wheel electronic systems (8, 9) of the electromechanical actuators (6, 7), and, on the other hand, connects the two wheel electronic systems (8, 9) to one another and permits communication between the wheel electronic systems (8, 9).

3. Parking brake system according to Claim 1, **characterized in that** a fourth signal line (4) is provided which connects the two wheel electronic systems (8, 9) of the electromechanical actuators (6, 7) directly to one another and permits communication.

4. Parking brake system according to one of the preceding claims, **characterized in that** the wheel electronic systems (8, 9) of the electromechanical actuators (6, 7) have a means for generating a majority decision.

5. Parking brake system according to Claim 4, **characterized in that** the signals of the control element (5) which are fed to the wheel electronic systems (8, 9) are connected to an OR logic element, and the electromechanical actuators (6, 7) are driven in accordance with the majority decision.

6. Parking brake system according to one of the preceding claims, **characterized in that** the wheel electronic system (8, 9) is supplied with the output signal of a wheel speed sensor (12, 13) which is located on the same wheel.

7. Parking brake system according to one of the preceding claims, **characterized in that** the wheel electronic system (8, 9) contains at least one microprocessor.

8. Parking brake system according to Claim 7, **characterized in that** redundant or redundant core microprocessors are used as the microprocessor in the wheel electronic systems (8, 9).

9. Parking brake system according to one of the preceding claims, **characterized in that** the control element (5) is equipped with at least three channels, and it outputs the driver's request in the form of at least three switching information items.

10. Parking brake system according to Claim 9, **characterized in that** the control element (5) is supplied and/or evaluated from the brake controller (10) or from the further controller (11).

11. Parking brake system according to Claim 9 or 10, **characterized in that** the control element (5) has electronic semiconductor components.

12. Parking brake system according to one of the preceding claims, **characterized in that** a redundant power supply of the parking brake system is provided.

13. Parking brake system according to Claim 12, **characterized in that** the redundant power supply is formed by two batteries (14, 15) with a charging circuit.

14. Parking brake system according to Claim 12, **characterized in that** the redundant power supply is formed by a management system (16) for a vehicle on-board voltage supply.

## Revendications

1. Équipement de freinage de stationnement pour véhicules automobiles comprenant un élément de commande (5) et au moins deux actionneurs électromécaniques (6, 7) pour générer une force de freinage de stationnement respectivement sur une roue du véhicule automobile, les actionneurs électromécaniques (6, 7) étant respectivement munis d'une électronique de roue (8, 9) et l'élément de commande (5) étant relié au moyen d'au moins une première ligne de signal (1) avec l'électronique de roue (8) du premier actionneur électromécanique (6) par le biais d'une unité de commande (10) et au moyen d'une deuxième ligne de signal (2) avec l'électronique de roue (9) du deuxième actionneur électromécanique (7) par le biais d'une unité de commande supplémentaire (11), **caractérisé en ce qu'**il est prévu au moins une troisième ligne de signal (3) qui relie l'élément de commande (5) directement avec les électroniques de roue (8, 9) ou à chaque fois avec l'un des actionneurs électromécaniques (6, 7) et communique le souhait du conducteur.

2. Équipement de freinage de stationnement selon la revendication 1, **caractérisé en ce que** la troisième ligne de signal (3) est configurée de telle sorte qu'elle relie d'un côté l'élément de commande (5) directement avec les électroniques de roue (8, 9) des actionneurs électromécaniques (6, 7) et de l'autre côté relie les deux électroniques de roue (8, 9) entre elles et permet une communication entre les électroniques de roue (8, 9).

3. Équipement de freinage de stationnement selon la revendication 1, **caractérisé en ce qu'**il est prévu une quatrième ligne de signal (4) qui relie directement entre elles les deux électroniques de roue (8, 9) des actionneurs électromécaniques (6, 7) et permet une communication.

4. Équipement de freinage de stationnement selon l'une des revendications précédentes, **caractérisé en ce que** les électroniques de roue (8, 9) des actionneurs électromécaniques (6, 7) présentent un moyen pour générer une décision majoritaire.

5. Équipement de freinage de stationnement selon la revendication 4, **caractérisé en ce que** les signaux de l'élément de commande (5) qui sont acheminés aux électroniques de roue (8, 9) sont combinés avec une liaison OU et une commande des actionneurs électromécaniques (6, 7) s'effectue d'après l'indication de la décision majoritaire.

6. Équipement de freinage de stationnement selon l'une des revendications précédentes, **caractérisé en ce que** le signal de sortie d'un capteur de vitesse de rotation de roue (12, 13) qui se trouve sur la même roue est acheminé à l'électronique de roue (8, 9).

7. Équipement de freinage de stationnement selon l'une des revendications précédentes, **caractérisé en ce que** l'électronique de roue (8, 9) contient au moins un microprocesseur.

8. Équipement de freinage de stationnement selon la revendication 7, **caractérisé en ce que** les microprocesseurs utilisés dans les électroniques de roue (8, 9) sont des microprocesseurs redondants ou à noyau redondant.

9. Équipement de freinage de stationnement selon l'une des revendications précédentes, **caractérisé en ce que** l'élément de commande (5) est équipé d'au moins trois canaux et délivre le souhait du conducteur sous la forme d'au moins trois informations tout ou rien.

10. Équipement de freinage de stationnement selon la revendication 9, **caractérisé en ce que** l'alimentation et/ou l'interprétation de l'élément de commande (5) s'effectue depuis l'unité de commande de freinage (10) ou l'unité de commande supplémentaire (11).

11. Équipement de freinage de stationnement selon la revendication 9 ou 10, **caractérisé en ce que** l'élément de commande (5) présente des composants électroniques à semiconducteur.

12. Équipement de freinage de stationnement selon l'une des revendications précédentes, **caractérisé en ce qu'**il est prévu une alimentation électrique redondante de l'équipement de freinage de stationnement.

13. Équipement de freinage de stationnement selon la revendication 12, **caractérisé en ce que** l'alimentation électrique redondante est formée par deux batteries (14, 15) avec circuit de charge.

14. Équipement de freinage de stationnement selon la revendication 12, **caractérisé en ce que** l'alimentation électrique redondante est formée par un système de gestion de la tension du réseau de bord (16).
